# EUROPEAN PATENT APPLICATION

(11) **EP 0 537 698 A1**
(43) Date of publication of application: **21.04.1993**
(21) Application number: 92117520.4
(22) Date of filing: 14.10.1992
(51) Int. Cl.: B62D 55/075, B62D 55/04, A61G 5/06

(54) **Tracked motor-vehicle, particularly adapted for invalid carriages**

(30) Priority: 18.10.1991 IT BO910382
(71) Applicant: T.G.R. S.r.l., I-40064 Ozzano Emilia (Bologna) (IT)
(72) Inventor: Toselli, Emilio, I-40068 S. Lazzaro di Savena (Bologna) (IT)
(74) Representative: Porsia, Dino, Dr.

(57) **Abstract**

The motor-vehicle is provided with side tracks (C1-C2) with respective electric motors (11-111) which actuate speed reducers (17-117) pivoted with their input shafts (16) on the inner side of said tracks and having keyed on their output shafts respective rubber-coated wheels (18-118) and respective pinions (19-119). The reducers are associated with raising/lowering units (22-122) which, when the motor-vehicle travels on its tracks, keep the rubber-coated wheels lifted from the ground and cause said pinions to mesh with ring gears (20-220) which are keyed to one of the wheels (3) for said tracks which are thus connected to the propelling motors. On the contrary, when the vehicle travels on its wheels, the reducers are lowered to cause the rubber-coated wheels to engage the ground and the tracks are kept in a lifted condition, with simultaneous disengagement of the pinions from the ring gears for said tracks.
Provided at the front side of the motor-vehicle is at least one steering wheel (28) which can be raised/lowered simultaneously with the rear wheels and which is provided on its shaft with a potentiometer permitting an accurate control of the motors during the steering of the motor-vehicle.

## Description

The invention relates to a tracked motor-vehicle, adapted for moving also on wheels and capable of overcoming, in a self-contained and safe manner, any path of travel, included going upstairs and downstairs. Said motor-vehicle has been devised particularly to make carriages for disabled persons, but it can also be used for other purposes, e.g. as a powered base for displacing a robot, a video-camera or other articles.

The characteristics of said motor-vehicle and the advantages resulting therefrom will become apparent from the following description of a preferred embodiment thereof, shown merely by way of non-limiting example in the Figures of the accompanying ten sheets of drawings, in which:
Figure 1 is a diagrammatic side elevational view of the motor-vehicle in the condition for traveling on its wheels;
Figure 2 is a side bottom perspective view of the motor-vehicle in the same condition as in Figure 1;
Figure 3 is a perspective view of one of the frames for the tracks of the motor-vehicle;
Figure 4 is a top perspective view of the motor-vehicle in the condition for traveling on its tracks;
Figures 5 and 6 are rear perspective views of the vehicle in the conditions for traveling on its tracks and on its wheels, respectively;

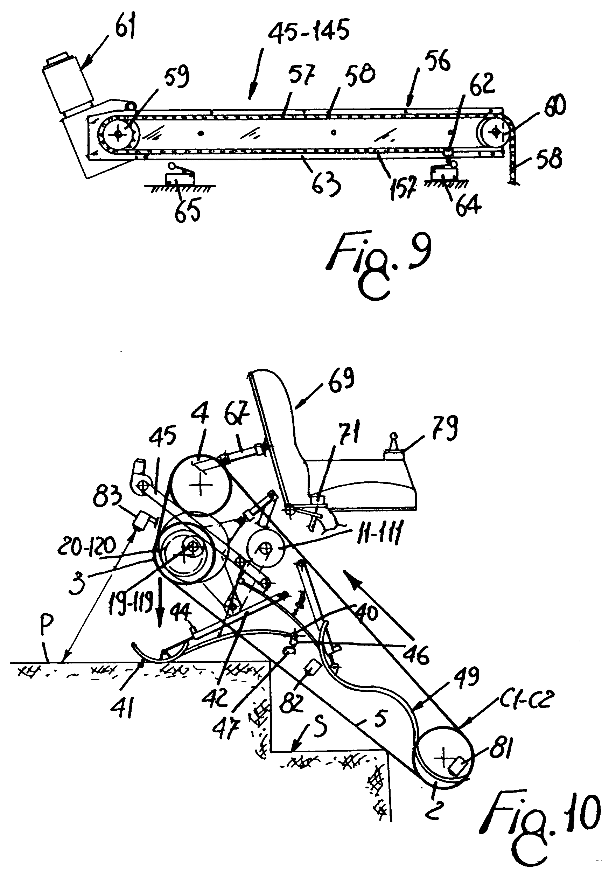

Figures 7 and 8 are perspective views of the supporting levers which are fulcrumed on the lower portion of the vehicle to enable the latter to effect the pitching movements when going either upstairs or downstairs;
Figure 9 is a diagrammatic side view of one of the winch devices for moving the supporting levers of Figures 7-8;
Figure 10 is a diagrammatic side view of the motor-vehicle while going upstairs;
Figures 11 and 12 are diagrammatic side views of the motor-vehicle in two successive steps while going downstairs;
Figure 13 is a block diagram of the main electric and fluid-operated circuits of the motor-vehicle.

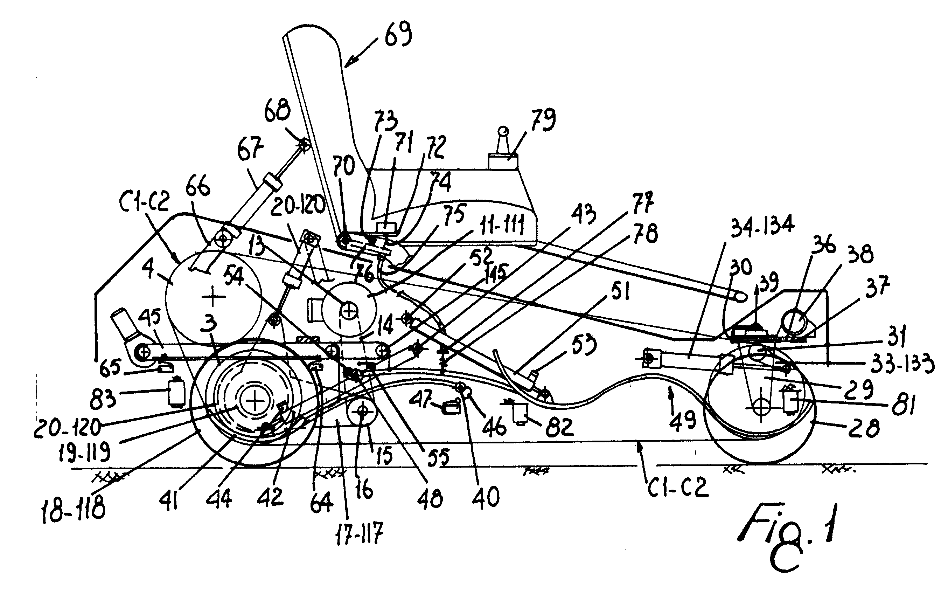

It can be seen in Figures 1-2-3-4 that the motor-vehicle is provided at both sides with two equal tracks C1-C2 each of which comprises a frame 1 with an intermediate rectilinear beam or sole 101 terminating at one end in a fork 201 for rotatably supporting an idle toothed wheel or pulley 2, and supporting at the other end an extension 301 having overhangingly and rotatably mounted on its inner side respective toothed wheels 3 and 4, the former being substantially at the same level as the wheel 2, while the latter is suitably in a raised and outwardly offset position. Mounted around said toothed wheels 2-3-4 is a belt 5 made of reinforced rubber, toothed on its inner side for positively co-operating with said toothed wheels, and characterized by having on its outer side a rough tread comprising equally-spaced teeth 105, for example, of trapezoidal outline with smaller bases facing outwards.

The stretch of belt 5 between the wheels 3-4 forms an obtuse interior angle, e.g. of about 120°, with respect to the lower rectilinear stretch of said belt, to obtain the best pre-arrangement of the tracks formed by said belts, in view of going upstairs, as specified hereinafter.

Suitable means is provided to put the belt 5 under tension. For example, one of the shafts of the idle wheels 2 or 4 may be provided with eccentric means useful for this purpose.

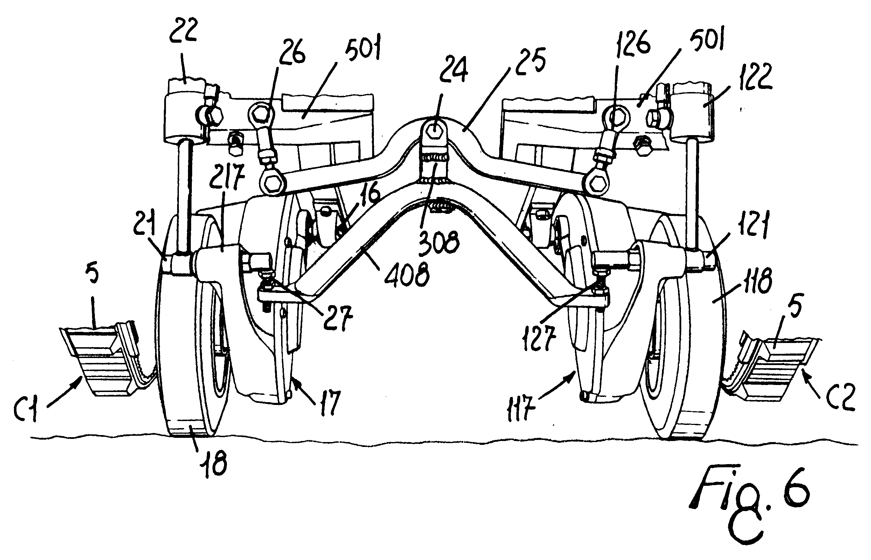

Secured longitudinally to the sole 101 is a C-shaped composite guide 6, lined with teflon on its inner side, wherein the belt 5 may move while prevented from displacing sideways and vertically. A stretch 106 of a similar guide, suitably secured to the frame 1 and other ancillary parts, guides the inclined stretch of belt running between the wheels 3 and 4 (Figure 5).

The intermediate portion of the sole 101 of the frame 1 for each track is provided with an integral bush 401 for pivotal connection transversely at 7, via conical bearings, with the intermediate portion of a frame 8 which is arranged between the tracks C1-C2 and is constructed so as to support, at an intermediate zone, thanks to a suitable supporting means 108, at least a pair of electric accumulators of suitable characteristics, a fluid-operated power unit 9 and the group of solenoid valves 10 rearwards of said supporting means and which, rearward of the last-mentioned elements, is provided with a pair of arms 208 extending upwards and curved rearwards wehereon the chair of the disabled is pivoted, as further explained below.

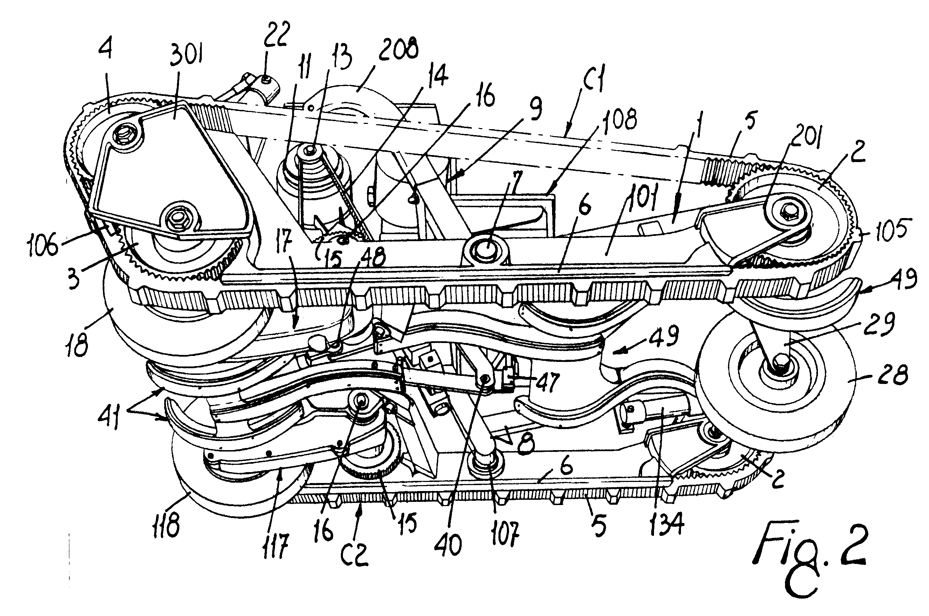

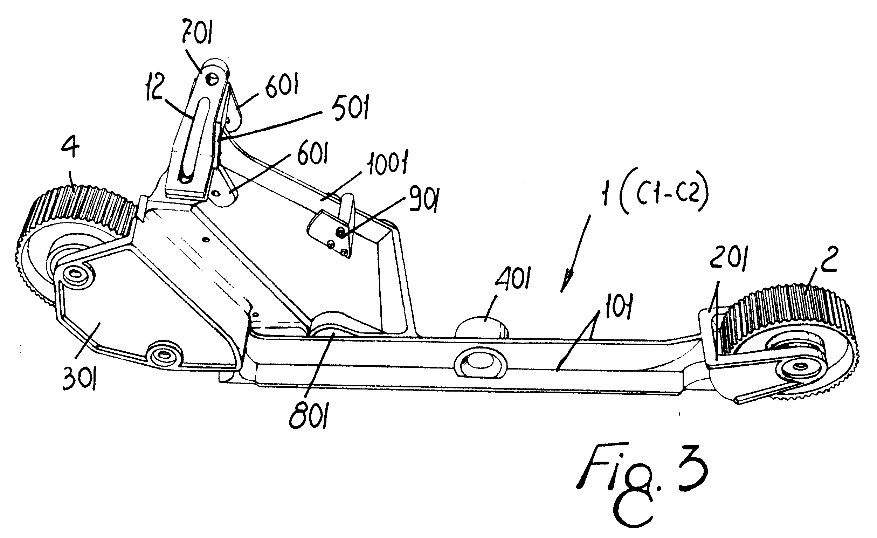

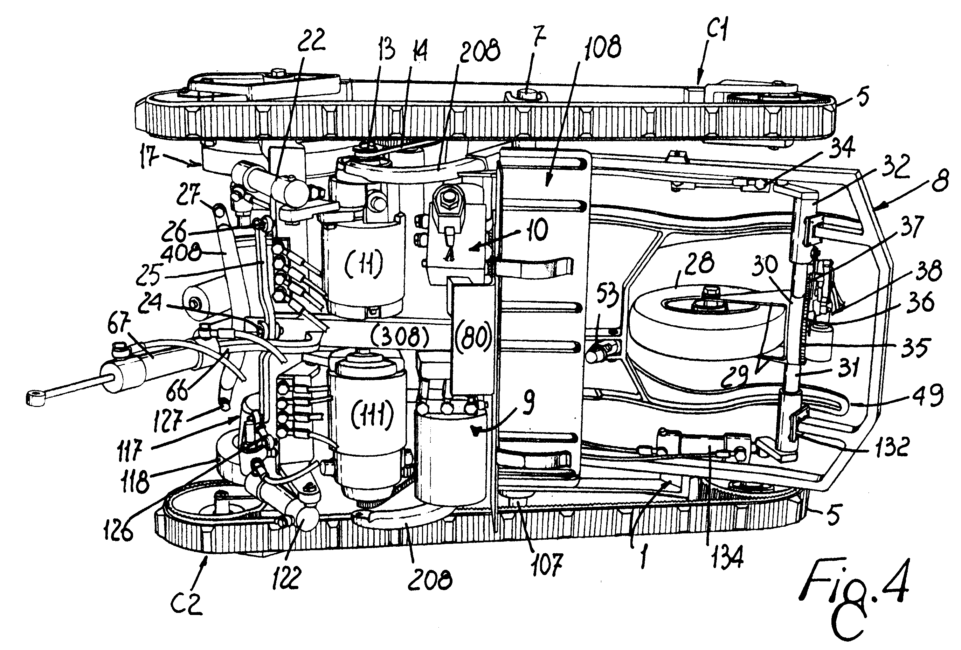

In Figures 2-3-4-5 it can be seen that each track supports, in a cantilever fashion on the inner side and at the uppermost portion of the extension 301, a small, substantially horizontal shelf 501 provided with parallel lugs 601 having pivoted thereon the body of a DC electric motor 11 with electromagnetic brakes, which is arranged with its axis horizontally and perpendicularly to the imaginary vertical plane of the near track, and whose shaft is directed towards said plane. A third point of the body of the motor 11 is connected to an extension 701 of the shelf 501, directed upwards and provided with a longitudinal slot 12 permitting to adjust the level of the motor to regulate the tension of the drive belt 14. Keyed on the shaft of the motor 11 (Figures 1-2) is a toothed pulley 13 co-operating, via a toothed belt 14, with a toothed pulley 15 which is keyed on a bush rotatable on a shaft 16 which is rotatably supported at the ends thereof, via suitable bearings, by an extension 801 of the sole 101 and by a support 901 which is secured to a curved element 1001 connecting said sole to the most overhanging portion of said shelf 501 (see Figure 3). The shaft 16 is parallel to the shaft of said motor 11.

The shaft 16 carrying the toothed pulley 15 penetrates the casing of a speed reducer 17 pivoted on the shaft 16 (Figures 1-2-5), which extends towards the rear portion of the track and is provided with an output shaft parallel to the shaft 16, directed towards the track and having keyed thereon a rubber-coated wheel 18 and a pinion 19 protruding from this wheel and arranged interiorly of a ring gear 20 which is keyed to the wheel 3 for the track.

The reducer 17 is provided at the rear side with an extension 217 having a transverse pin 21 so as to assume the configuration of a T. One end of said pin is connected to the piston rod of a small hydraulic, double-acting cylinder and piston unit 22 whose body portion is secured at 23 to the top portion of the extension 701 of the near track frame.

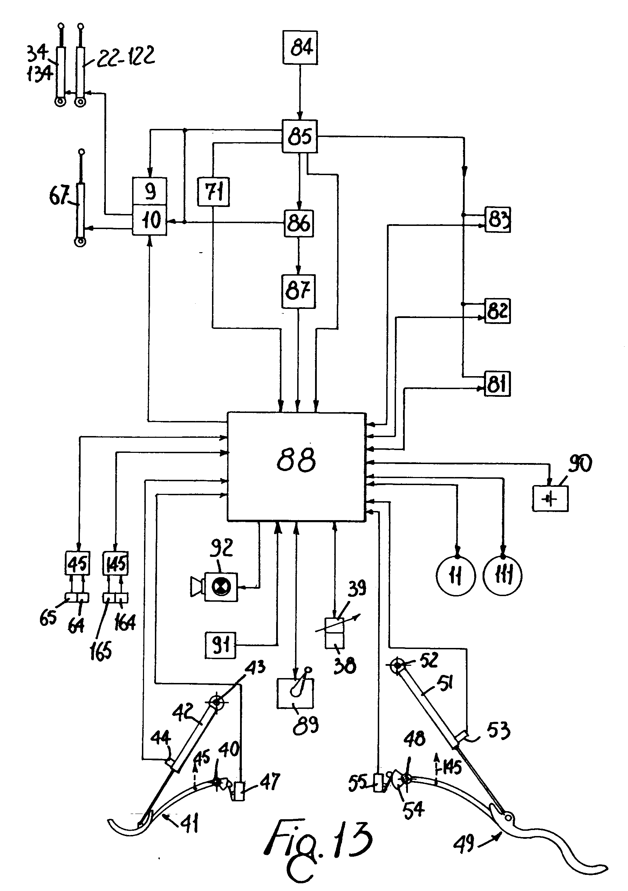

When the cylinder 22 is in a position displaced rearwards, as in Figure 5, the wheel 18 is in a lifted position with respect to the lower stretch of the belt 5 forming the tracks C1-C2 and, as shown in Figure 10, the pinion 19 is in mesh with the ring gear 20, whereby the rotation of the motor 11 is transmitted to the track C1. In a similar manner, the electric motor 111 transmits its rotation to the assembly 117-118-119-120 and then to the track C2. The tracks C1-C2 are controlled by the motors 11-111 which may be activated at either the same or different speeds depending upon the position of the lever 89 which controls the steering (see Figures 13 hereinafter).

It can be seen in Figure 5 that the frame 8 carrying the chair is provided intermediately on its rear side with a support 308 directed upwards and having pivoted thereto at 24 the intermediate portion of a yoke 25 whose ends are connected to the intermediate portion of the small shelves 501 of the frames for the tracks C1-C2, by means of tierods 26 having ball-joint end connections.

The central frame 8 carrying the chair for the disabled person is connected to the tracks intermediately thereof, it can oscillate transversely on independent axes 7-107, and it is connected at the rear to the frame 1 for said tracks, via said articulation 24-25-26. The center of gravity of the motor-vehicle when loaded is substantially at the center of, or anyway within, the area of connection of the frame 8 to the tracks.

The tracked carriage thus constituted is articulated and particularly adapted for traveling even on extremely uneven ground. Due to the presence of said articulation 24-25-26, the relative downwards and upwards movements of the tracks are transferred with reduced displacements to the frame 8, thus alleviating the discomfort to the person on the chair and ensuring always a constant and correct engagement of the tracks also on uneven areas of the ground, for example on a curved portion of a flight of stairs.

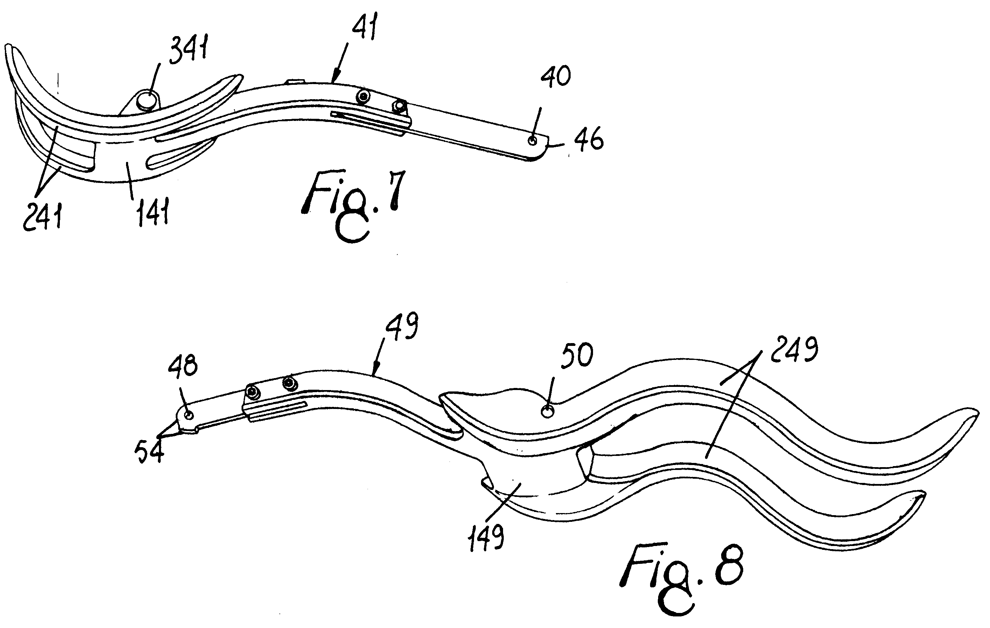

On the contrary, when the cylinders 22 are moved to the extended condition, the lowering movement of the reducers 17-117 is stopped when the free ends of the pins 21-121 abut against adjustable stops 27-127 arranged at the ends of a crossmember 408 which is welded to the rear side 308 of the frame 8 (Figure 6). In these conditions, the frames 1 for the tracks are secured rigidly to the frame 8 and the rubber-coated wheels 18-118 rest on the ground and keep said tracks suitably lifted therefrom. It can be seen in Figure 1 that the pinions 19-119 locked to the shafts of the rubber-coated wheels 18-118 are disengaged from the ring gears 20-120 for the tracks and the motor-vehicle is in the condition for traveling on the two rear drive wheels 18-118 and on the front, idle, intermediate and steering wheel 28 which will be described below.

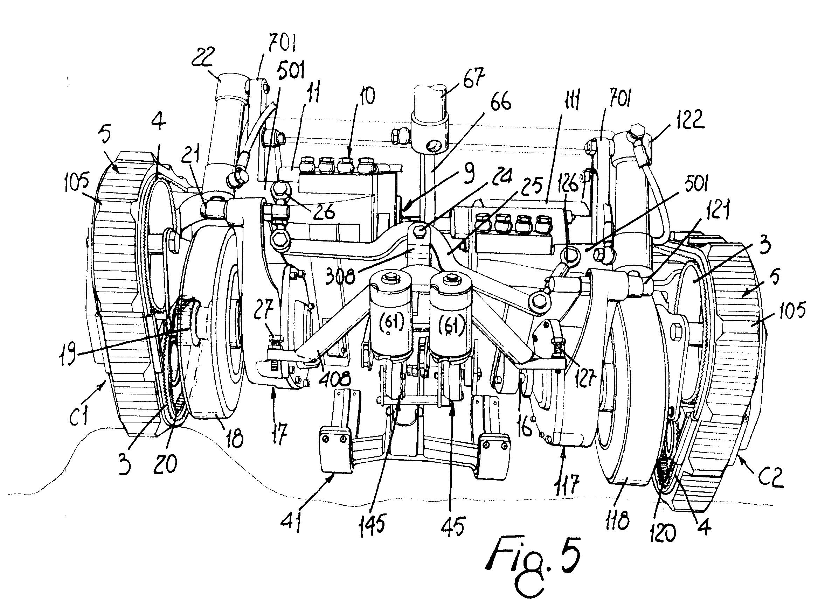

in Figures 1-4 it can be seen that the wheel 28 is mounted to be idle on a fork 29 which is supported via a bearing, so as to be able to rotate about an axis perpendicular to that of said wheel, by a support member 30 secured to the intermediate portion of a shaft 31 arranged crosswise in the front portion of the frame 8 and rotatably supported thereby by means of support members 32-132. The ends of the shaft 31 are provided with lever arms 33-133 which are connected to the piston rods of fluid-operated, double-acting cylinder-and-piston units 34-134 whose body portion is anchored to extensions of the frame 8. When the units 34-134, actuated simultaneously with the units 22-122, have their piston rods in a retracted condition, as in Figure 4, the wheel 28 is in a raised condition and the motor-vehicle can travel on its tracks. On the contrary, when the units 34-134 have their piston rods in the extended condition, as in Figures 1-2, the wheel 28 rests on the ground and its steering axis is disposed vertically.

Keyed to the top of the fork 29 is a sprocket 35 which by means of a chain 36 co-operates with the sprocket 37 which is keyed on the shaft of a small geared motor 38 of the worm-gear type, the body portion of which is secured to the support 30 by means of a mounting extension. The transmission 35-36-37 further reduces towards the steering axis the rotation effected by the geared motor 38.

Mounted on the steering axis of the front wheel is a potentiometer 39 which, when the vehicle is in the condition for traveling on its wheels, generates an electric signal which is proportional to the rightwards or leftwards angular position of the wheel 28 with respect to a zero position wherein the axis of said wheel is parallel to that of the rear wheels 18-118. Said signal is used to change the speed of rotation of the motors 11-111 of the vehicle in the manner and for the purposes disclosed below.

In Figures 1-2 it can be seen that in the lower portion of the frame 8 there is fulcrumed transversely at 40, near the centerline and in the area of the center of gravity, the end of a feeler 41 arranged along the length of said frame and directed towards the rear portion of the vehicle. The initial portion of the feeler 41 is curved, with convexity facing upwards, and terminates at the rear end in a cross member 141 whose ends are fixed to the intermediate portions of curved, equal supports 241 whose concavity faces upwards. The assembly 41-141-241 is coated on the lower side thereof with pads of plastics material.

The intermediate portion of the crossmember 141 is integral with upper lugs 341 which are pivotably connected to the end of a shock absorber 42 which is connected at 43 to the fram 8 and resilient means is provided (for example, incorporated in said shock absorber) to urge said shock absorber to an extended condition. The shock absorber 42 is provided with a pressure switch 44 which changes its state when said shock absorber is subjected to compression and when this action terminates.

When the motor-vehicle is in the condition for traveling on its wheels or its tracks, the feeler 41 is usually in a raised condition to avoid interferring with the ground. The raising action is effected by a powered winch device 45 which is connected to the intermediate portion of said feeler (see below).

The end of the feeler 41 near to the fulcrum 40 has secured thereto or integral therewith a cam 46 which, during the downwards oscillation of said feeler, when the latter has traveled about 50% of its stroke, co-operates with a microswitch 47 secured to the frame 8.

Parallel to the fulcrum 40, rearwards of the frame 8, is a fulcrum 48 for a feeler 49 also arranged along the length of said frame, offset with respect to the feeler 41 to avoid interferring therewith and directed towards the front side of the vehicle. The initial portion of the feeler 49 is curved with its convexity facing upwards, and its end carries a crossmember 149 having secured thereto a couple of equal ribbed extensions 249 which are parallel to each other and are undulated with convex end portions facing downwards and intermediate convex portions facing upwards, with a suitable radius of curvature (see below). The assembly 49-149-249 is coated with pads of suitable plastics on its lower side.

Fulcrumed at 50 on the crossmember 149 is one end of a shock absorber 51 urged to an extended condition by a resilient means, the other end being anchored at 52 to the frame 8. The shock absorber 51 is also provided with a pressure switch 53 which changes its state when said shock absorber is submitted to a compressive action and when said action ceases.

The feeler 49 is usually in a raised condition to avoid interferring with the ground, and it is kept in this condition due to the connection to a powered winch device 145, similar to the winch 45 which controls the rear feeler 41, and also arranged in the intermediate rear portion of the central frame 8.

The feeler 49, similarly to the feeler 41, is also provided, at the fulcrumed end, with a cam 54 which, when said feeler has operated more than 50%, acts on a microswitch 55 secured to the frame 8.

With reference to Figure 9, it can be seen that the powered winches 45-145 for lowering/raising the feelers 41-49 comprise an elongated flat and composite structure 56 secured along the length of the frame 8 and provided with two longitudinal parallel grooves 57-157 for slidingly guiding the two stretches of a chain 58 mounted around a sprocket 59 and an idle pulley or sprocket 60 arranged at the two opposite ends of said structure 56 which is disposed on the frame 8 so that the stretch of chain coming from the component 60 is in a suitable position for connection to the lever 41 to be actuated. The sprocket 59 is instead connected to a small geared motor 61, which is of irreversible type, is rotatable in both directions and its body portion is secured to the structure 56. Secured to the free end of the lower stretch of the chain 58 is an extension 62 which is passed out of the structure 56 through a longitudinal slot 63 and which may act on limit microswitches 64-65 secured to said structure. It is apparent that, upon actuation of the sprocket 59 in clockwise direction, the chain is withdrawn from the lower guide 157 and is urged to get out by the same extent from the opposite end of the structure 56, thus permitting the feelers 41 or 49 connected to said chain to move downwards (see below).

In Figures 1-4-5 it can be seen that the rear portion of the frame 8 is provided intermediately with an extension 66 directed upwards and having articulated thereto the body of a hydraulic, double-acting cylinder-and-piston unit 67 whose other end 68 is connected to the back of a chair 69 which is pivoted at 70 with the rear end sides of its seat to the arms 208 of said frame 8. The unit 67 is activated when the vehicle travels on its tracks and keeps the chair suitably positioned at all times, with its seat in a horizontal position. For this purpose, the solenoid valves which control the unit 67 are controlled by an electronic circuit, easily conceivable by those skilled in the art, which is activated by a so-called inclinometer 71 arranged at one side of the chair, preferably in proximity of the articulation 70 for elimination of lateral accelerations. Upon a variation in the attitude of the chair, the inclinometer changes in orientation and transmits a proportional signal to an electronic circuit which , upon exceeding a pre-established limit value, activates the solenoid valves which actuate the unit 67 in either direction to return the chair to a horizontal position. The electronic circuit comprises time-delay provisions or other provisions to avoid any undersired hunting of the chair.

Finally, in Figure 1 it can be seen that, preferably, the inclinometer is carried by a support 72 which is oscillatable about an axis which coincides with the pivot 70, that it is maintained in a rest position by a resilient means 73 and is connected to a steel wire 74 slidable in a sheath 75 abutting at one end against a support 76 fixed to the body of the chair and abutting at the other end against a support 77 fixed to the frame 8, at a point not too far from the fulcrum 48 of the feeler 49 to which said wire is connected at the other end, and with the intermediary of a spring which is tougher than the spring 73.

The control board 79 is arranged at an arm-rest of the chair 69 and is connected to an electronic card secured to a support 80 (Figure 4), so as to be disposed above the hydraulic power unit 9, the assembly of solenoid valves 10 and the electric motors 11-111 for propelling the motor-vehicle. Connected to said car are all the components of the electric circuit for the motor-vehicle, including three telemeter sensors 81-82-83, e.g. of the optical-electronic type, secured to the frame 8, facing downwards, and arranged at the front side, rear side and intermediate region of said frame (see below). These sensors are facing downwards to detect the distance of said three points of the vehicle from the ground when the vehicle is in the condition for traveling on its tracks. Said sensors emit an electrical signal which proportional to the distance between them and the portions of ground they are facing therebelow.

The motor-vehicle conceived as above operates as follows.

In Figure 13 it can be seen that the control board comprises a master switch 84 feeding all the components of the machine under the control of a timer which automatically discontinues the feed if the user has not actuated other controls within a pre-established period of time, e.g. within one minute. After activating the master switch, a switch 85 is acted upon to select the traveling mode of the motor-vehicle, i.e. on the two tracks C1-C2 or on the three rubber-coated wheels 18-118-28. If the vehicle is already in the desired traveling mode, no particular manoeuver is to be done. On the contrary, if the traveling mode is to be changed, a pushbutton 86 is acted upon to activate the hydraulic feed to the cylinder-and-piston units 22-122 and 34-134 for either raising or lowering the rubber-coated wheels 18-118-28. If the switch 85 is in the position for traveling on the wheels, said pushbutton 86 also activates temporarily the hydraulic unit 9 which normally is not fed. The electric circuit leading to the optical-electronic sensors 81-82-83 and to the inclinometer 71 is not fed as well.

The condition of the motor vehicle when traveling on its wheels will now be discussed. In this condition, the user may control a sector 87 to effect a selection between two speeds of travel: a first slow speed of travel, e.g. for moving indoors, and a second rapid speed for moving outdoors. The block 88 controlling the electric motors 11-111 is such that if the user commands a reverse motion by the control 89, said motors are fed automatically for the slower speed even if initially the maximum speed had been selected.

The joy stick or main control 89, through the block 88, controls the motors 11-111 with variable motion, with the maximum speed never exceeding the maximum value selected by means of the switch 87, and it controls the geared motor 38 for the front steering wheel 28. In both speed conditions, the speed of rotation of the motors 11-111 is automatically proportional to the position of the main control lever 89, with retroaction control by means of the potentiometer 39 arranged at the steering axis of said front wheel 28, all for the purpose of obtaining an efficient and safe steering which causes no side skid or overturning of the vehicle and which limits as much as possible the consumption of electric energy by the propelling motors.

The braking action of the electric motors 11-111 is of the dynamic type, with recovery of energy towards the electric accumulators 90. A control 91 is also provided whereby the user can activate the electromagnetic brakes of the motors 11-111 to stop the vehicle in the desired position, with prevention of any further manoeuver.

The condition when traveling on the tracks will now be discussed. After activating the master switch 84, the switch 85 is acted upon, if necessary, for selecting the condition of riding on the tracks. In this condition, the hydraulic unit 9 and inclinometer 71 are activated and the optical-electronic sensors 81-82-83 are pre-arranged for activation.

If the tracks of the motor-vehicle do not rest on the ground, this condition is achieved by acting on the control 86 to raise the wheels 18-118-28 by means of the cylinder-and-piston units 22-122-34-134. In this traveling condition, the motors 11-111 are pre-set for a pre-established rotation at a comparatively slow speed.

The manoeuver for riding upstairs will now be discussed, with reference to Figure 10. This manoeuver is effected by moving the motor-vehicle rearwards, so as to approach the first step of the stairway with the stretch of concordant obliquity of the rear side of the toothed belts 5 of the tracks C1-C2. During this period, the rear optical-electronic sensor 83 is activated, whereas the other two sensors 81-82 are de-activated. The activation of the optical-electronic sensors is stored electronically to avoid any undesired overlapping of controls in the critical period of riding upstairs, when the vehicle reaches the unstable equilibrum position at the top of the stairway (see below).

Both upon approaching the stairway and upon riding upstairs, the motors 11-111 may be actuated at the same speed or at different speeds by means of the control 89 (Figure 13), so as to be able, if necessary, to correct the direction of travel of the vehicle. The vehicle rides normally up the steps of the stairway S thanks to the outer toothing of the belts 5 of both tracks.

When the sensor 83 detects that the distance from the ground exceeds the pre-established value, which indicates that the vehicle has arrived at the upper landing P of the stairway, the motors 11-111 are slowed down automatically and, with a suitable delay to avoid any false maneuvers, the actuation is effected of the geared motor for the winch 45 for releasing the front feeler 41 which, under the action of the spring of the shock absorber 42, gradually moves its front end 241 to rest onto the landing P. The winch device 45 is automatically stopped upon actuation of the limit microswitch 65 (see also Figure 9).

Upon the downwards oscillation of the feeler 41, the latter activates the microswitch 47 which signals to the block 88 that said feeler has become activated. If this condition is not signaled concurrently with the activation of the limit microswitch 65 or within a pre-established period of time, the acoustical and visual alarms 92 are activated, the motor-vehicle is stopped and the only possible maneuver is the descent downstairs.

In the normal operating conditions, the vehicle reaches and oversteps the point of unstable equilibrium at the edge of the landing P, and when its weight loads the shock absorber 42, thus switching over the pressure switch 44, the motors 11-111 are stopped automatically and the vehicle is slightly lowered down whereby its tracks will rest on the landing P. The sensor 83 sends a signal to the block 88 when the vehicle rests on the landing P, and automatically - also concurrently with the de-activation of the pressure switch 44 - the feeler 41 is caused to lift up completely, and the winch device 45 is stopped by the action of its limit sensor 64 which simultaneously enables the block 88 to activate the motors 11-111 to proceed in riding upstairs.

During the riding upstairs, the inclinometer 71 commands, via the actuating unit 67, the changes of trim of the chair 69 to keep it in a horizontal position at all times.

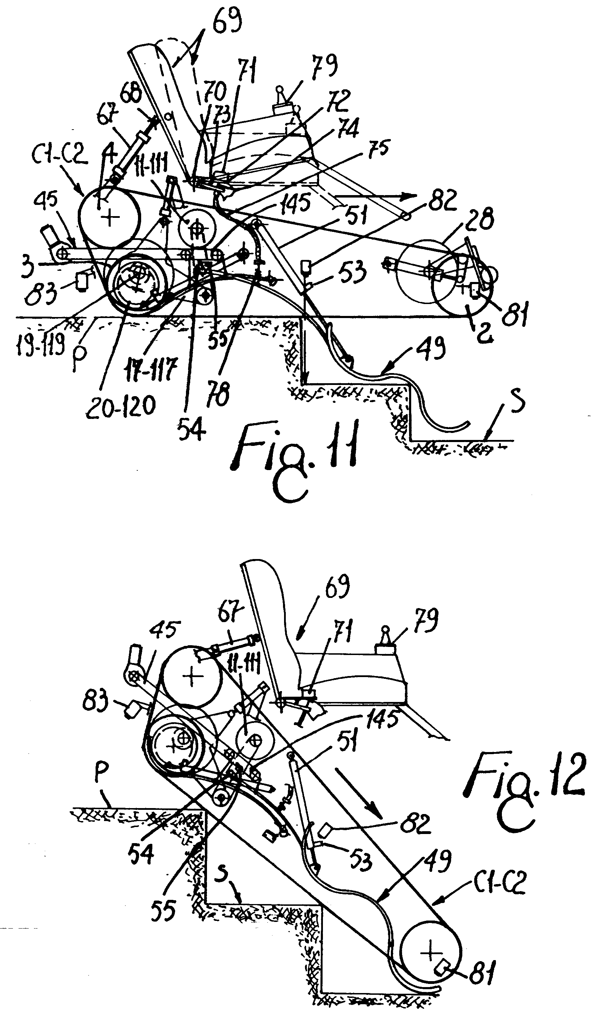

The riding downstairs will now be discussed with reference to Figures 11-12-13. This operation is carried out with the motor-vehicle traveling forwards and by activating the front optical-electronic sensor 81 and the intermediate one 82. From Figures 11-13, it can be realized that when the front sensor 81 detects a distance which corresponds normally to the first step of the stairway, the motor-vehicle is slowed down and the winch device 145 is activated to release the front feeler 49 which is moved gradually to a rest position onto the steps, whereupon it signals its action to the block 88 via the microswitch 55. The device 145 is stopped automatically when the limit microswitch 165 is actuated. When the intermediate sensor 82 detects the overpassing of a given distance which corresponds, for example, to the first step and which anyway is such that the vehicle is at a stable rest on the landing P, said vehicle stops automatically if no intervention has occurred of the microswitch 55 which should signal the lowering of the feeler 49, and in this case the optical and acoustical alarms 92 are activated, and the only possible maneuver is to reverse the motion. However, if the intervention of the microswitch 55 has occurred normally, the motor-vehicle goes on slowly until the entire weight thereof bears on the feeler 49 resting on the steps of the stairway. This condition is readily detected by the pressure switch 53 of the shock absorber 51, which stops the motor-vehicle whereby the latter slowly oscillates down until its tracks will rest in a stable manner on the stairway, as in Figure 12. It is apparent that the composite configuration of the end portion 349 of the feeler 49 enables it to rest securely both on recessed and on ridged portions of the stairway. When the tracks are completely at rest on the stairway, the pressure switch 53 is de-activated and the sensor 81 detects the presence of said stairway, whereby the command is given to completely raise the feeler 49 with activation of the winch device 145 which automatically will be stopped upon intervention of the limit microswitch 164 and the latter will enable the forward movement of the vehicle to proceed if so commanded. The vehicle can proceed its movement downstairs and arrive at the lower landing without any other particular maneuver.

It can be seen in Figure 11 that during the travel downstairs, when the feeler 49 becomes operative, it causes the support 72 carrying the inclinometer 71 to be lowered to make the chair 69 rotate rearwards to dispose the user in the safest position during the travel downstairs. Pratically, this advances the correction of trim which will be then controlled automatically by the inclinometer. Then, when successively the feeler 49 is raised, the inclinometer resumes its original position, with re-activation of the device for advancing the trim correction of the chair.

The chair is provided with a seat-belt (not shown) connected to safety and warning means for signaling automatically if the user is not in a correct position.

Even in the condition of riding on the tracks, the motor-vehicle can be stopped by means of the control 91, with energization of the electromagnetic brakes of the motors 11-111.

## Claims

1. A tracked motor-vehicle, with at least one pair of side tracks, capable of overcoming in a self-contained and safe manner any type of travel, including riding upstairs and downstairs and on strongly inclined planes, particularly suitable for invalid carriages, characterized in that the tracks (C1-C2) are actuated at one end thereof, preferably the rear end, by independent electric motors (11-111) mounted on a support which is solidary with the frame (1) for said tracks and transmitting the motion to the input shaft of respective speed reducers (17-117), supported by the inner side of said frame for the tracks, with possibility of oscillating on said input shaft which is parallel to the axes of the wheels (2-3-4) of each track, the output shafts of said reducers being parallel to the input shafts and having keyed thereon respective rubber-coated wheels (18-118) and respective pinions (19-119), the reducers being connected to respective raising and lowering actuators, for example, fluid-operated, double-acting cylinder-and-piston units (22-122) which are anchored to an extension integral with the frame of each track, the arrangement being such that when the motor-vehicle travels on its tracks the reducers (17-117) are raised, and that the pinions (19-119) keyed to the shaft of the rubber-coated wheels (18-118) are in mesh with respective toothed ring gears (20-120) which are keyed to one of the toothed wheels (3) diverting around each track, for activating said tracks, while said rubber-coated wheels are raised from the ground; and the arrangement being such that, conversely, by commanding an oscillation downwards of the reducers (17-117) via said actuators (22-122) until they abut against limit stops (27-127-408) integral with the central frame (8) of the motor-vehicle, the rubber-coated wheels (18-118) of the reducers (17-117) will rest on the ground and the tracks will be raised up, with simultaneous disengagement of the pinions (19-119) which are co-axial with said rubber-coated wheels, from ring-gears (20-120) of one of the wheels for the tracks which are thus de-activated, and that in this condition of traveling on the wheels, the motor-vehicle will be provided with at least one steering wheel (28) which may be also raised and lowered, so that by acting on suitable controls (85-86) the motor-vehicle may be, if desired, arranged either for traveling on its tracks along hard stretches, e.g. for riding upstairs or downstairs or on inclined planes, or it may be arranged for traveling on its wheels along planar surfaces either horizontal or slightly inclined, and in this instance the tracks are de-activated to avoid friction and waste of electric energy for feeding the motors.

2. A tracked motor-vehicle according to claim 1, characterized in that the central frame (8) mounting the invalid chair, is articulated laterally to the intermediate portion of the frame (1) for the tracks (C1-C2), the latter of which supports rearward of said articulation (7) the fulcrum (16) permitting the oscillation of the speed reducers (17-117) connected to the electric propelling motors (11-111) and provided with rubber-coated wheels (18-118) and with pinions (19-119) for actuating the tracks; wherein rear portions of the frame for the tracks, e.g. in the forms of shelves (501) supporting said propelling motors, are articulated by equal tierods (26) to the ends of a bar (25) arranged crosswise in the rear portion of the motor-vehicle and pivoted intermediately to a support (308) fixed to said central frame (8) carrying the load to be transported, the arrangement being such that in the condition for traveling on the tracks, said motor-vehicle may be so articulated as to rest in a stable manner with its tracks also on parts not at the same level, such as curved flights of stairs and so as to transmit de-multiplied displacements to the central frame (8).

3. A tracked motor-vehicle according to claim 1, characterized in that the front portion of the central frame (8) transversely and rotatably supports a shaft (31) provided at the ends thereof with levers (33-133) connected to fluid-operated, double-acting cyclinder-and-piston units (34-134) whose body portion is anchored to said central frame, the intermediate portion of said shaft being secured to a support (30) which supports rotatably about an axis perpendicular to said shaft, a fork (29) carrying a rubber-coated wheel (28) and carrying firmly at the top a pinion or sprocket connected by a chain or other means to a small geared motor (38) secured to said support (30) and connected to the steering circuits and controls (89), the arrangement being such that when the motor-vehicle is in the condition for traveling on the tracks said steering wheel is raised from the ground, whereas in the condition for traveling on the wheels said steering wheel rests on the ground thus raising the front portion of the tracks from the ground, and finally wherein the steering shaft has mounted thereon a potentiometer (39) which in the condition for traveling on the wheels generates an electric signal which is proportional to the angular position of the steering wheel with respect to a zero position wherein said wheel is parallel to the rear driving wheels, said signal being used to control the speed of rotation of the propelling motors (11-111) during the steering operation whereby it is differentiated and such as to ensure a safe steering with no waste of energy.

4. A motor-vehicle according to the preceding claims, wherein the electric accumulators feeding the propelling motors (11-111) and the various control and safety circuits are arranged intermediately of the central frame (8) carrying the load to be transported an rearwards of said accumulators the raid frame mounts the hydraulic power unit (9) with the assembly of solenoid valves (10) which are required to control the various cylinder-and-piston units comprised in the motor-vehicle.

5. A motor-vehicle according to any one or more of preceding claims, characterized in that it comprises means whereby in the condition for traveling on the wheels the selection is possible between two maximum speeds forwards, a slower one for riding indoors and a faster one for riding outdoors, the travel in reverse being always effected at the slower speed.

6. A motor-vehicle according to any one or more of the preceding claims, characterized by a braking system of the dynamic type, with energy regeneration towards the electric accumulators (90) feeding said motor-vehicle, the propelling motors being provided with an electro-magnetic brake which can be activated by a control (91) when said motor-vehicle is to be stopped in a desired position.

7. A motor-vehicle according to the preceding claims, wherein the tracks (C1-C2) comprise a frame (1) formed with an intermediate rectilinear portion (101) provided intermediately of the bush (401) for articulation to the central frame (8) and therebeneath is fixed a guide (6) controlling the lower stretch of the toothed belt (5) constituting said track and comprising on the outer side thereof equally-spaced teeth (105), preferably of trapezoidal section with free smaller bases; the front end of said frame terminating in a fork (201) supporting a toothed wheel or pulley (2) for turning around thereon said belt, and the rear portion of said frame being provided with an extension (301) mounting rotatably and overhangingly on the inner side thereof the other two toothed wheels or pulleys (3-4) diverting the belt, which are disposed so that the rear side of said belt has a stretch with the typical inclination of tracks, which is controlled by a suitable guide (106), the frame for the track being provided on the inner side and at the rear, with extensions (501-601-701-801-901-1001) required for supporting the propelling electric motor (11 or 111) and the casing of the speed reducer (17 or 117) connecting the motor to the rear rubber-coated wheel 18 or 118) and to the pinion (19 or 119) actuating the track.

8. A motor vehicle according to any one or more of the preceding claims, characterized in that the central frame (8) has articulated thereto at the bottom, in a transverse direction and the region of the center of gravity, the ends of two feelers (41-49) arranged along the centerline of said frame and directed one towards the rear side and the other towards the front side of the motor-vehicle, said feelers being normally in a raised condition to avoid interferring with the ground if not (as explained below) when the vehicle is in the condition for traveling on its tracks when riding upstairs or downstairs or on strongly inclined stretches, said feelers being provided with suitably curved end portions, being covered at least on the lower side with plastics material and being connected to respective shock absorbers (42-51) anchored to the central frame (8), provided with an extension resilient means and with respective pressure switches which change their state when said shock absorbers are stressed compressively and when this action ceases, and said feelers being connected to respective powered winch devices (45-145) also secured to said central frame.

9. A motor-vehicle according to claim 8, wherein means are provided to signal to the electronic circuit controlling the operation of said motor-vehicle when riding upstairs or downstairs, the rest condition or the active condition of the feelers (41-49), said means consisting, for example, of cams (46-54) either fixed to or integral with the pivoted end portion of said feelers and co-operating with suitably arranged respective microcontacts or sensors (47-55).

10. A motor-vehicle according to claim 8, wherein the feeler (41) directed towards the rear side of said motor-vehicle, is characterized in that it comprises a curved initial portion, with convexity facing upwards, terminating in a crossmember (141) whose ends are solidary with curved equal supports (241) whose concavity faces upwards, the whole being lined on the lower side with suitable plastics material.

11. A motor-vehicle according to claim 8, wherein the feeler (49) directed towards the front side of said motor-vehicle comprises a curved initial portion with convexity facing upwards and terminating in a crossmember (149) whose ends are solidary with substantially sinusoidal supports (249) which are extensions of said lever and which have rounded ends with a convexity facing downwards and a rounded intermediate portion with a convexity facing upwards, the assembly being such as to cooperate either with recessed and with ridged portions of a stairway, said feeler being lined on the lower side with pads of suitable plastics material.

12. A motor-vehicle according to claim 8, wherein the winch devices (45-145) for releasing and recovering the feelers (41-49), comprise a roller chain (58) sliding in parallel superposed guiding grooves (57-157) formed in a composite body (56) secured to the central frame (8) of the motor-vehicle and provided at the ends thereof with sprockets (59-60) from one of which, idle, departs the chain leading end with is connected to one of said feelers, while the other sprocket is connected to a small geared motor of irreversible type and rotatable in both direction (61), secured to said composite body, the other end of the chain is connected to an extension (62) protruding from a window (63) in said body (56) and cooperating with a pair of limit micro-contacts or limit sensors (64-65).

13. A motor vehicle according to the preceding claims, characterized in that it is provided, on the central frame (8), at the ends and preferably also in the intermediate portion, with telemetric sensors (81-82-83) capable of emitting a signal which is proportional to the distance between them and the underlying portion of ground to which they are directed, said sensors being, for example, of the optical-electronic type and being activated only when the motor-vehicle is in the condition for traveling on its tracks, the arrangement being such that for riding in reverse the rear sensor (83) is activated, whereas for riding froward the front sensor (81) and intermediate sensor (82) are activated, and that are activation of the sensors is suitably stored in the memory so as to avoid undersired overlapping of commands in the critical moments of riding upstairs or downstairs.

14. A motor vehicle according to the preceding claims, characterized in that the riding upstairs or up on a strongly inclined plane is effected with the motor-vehicle in the condition of traveling on the tracks and in reverse, with activation of the rear optical-electronic sensor (83), the arrangement being such that when said sensor detects the trespassing of a given distance, indicating the arrival of the motor-vehicle at the upper landing (P) of the stairway, the slowing down of the motion of said motor-vehicle is automatically commanded, and commanded as well is the activation of the winch device (45) releasing the rear feeler (41) which under the action of the shock absorber (42) moves to rest on the landing, signaling said action by actuating the purposely-provided microswitch (47), the arrangement being such that when the motor-vehicle moves beyond the point of unstable equilibrium and its weight bears on said rear feeler, thus changing the state of the pressure switch (44) of the shock absorber, the motor-vehicle is stopped automatically and in this condition it gradually oscillates downwards by gravity until its tracks will rest steadily on the landing, and when the rear optical-electronic sensor (83) detects this rest condition, the rear feeler (41) is raised completely by the respective winch device (45) which, with the successive activation of the limit sensor (65), permits the vehicle to resume its travel if the respective control is still activated.

15. A motor-vehicle according to the preceding claims, characterized in that the riding downstairs is effected by moving on the tracks, moving forwards and by activation of the front optical-electronic sensor (81) and intermediate one (82), the arrangement being such that the movement of the vehicle is automatically slowed down when said front sensor detects the trespassing of a pre-established distance, usually corresponding to the first step while at the same moment the command is given to release the front feeler (49) which gradually moves until it rests on the steps under the pushing action of the respective shock absorber (51), the arrangement being such that when the second sensor (82° detects the trespassing of a pre-established distance, so that the vehicle is still in a stable rest condition on the upper landing of the stairway, the movement of said vehicle will be stopped only if the microswitch (55) which usually signals the intervention of said front feeler (49) has not been actuated, the activation being devised in this case of visual and acoustical warning means (92) and the only permitted maneuver is the reverse movement; in contrast, the invention provided that in the normal operating conditions the slow movement of the motor-vehicle continues until the pressure switch (53) connected to the shock absorber (51) of the front feeler is activated, said front feeler detecting the weight of the vehicle bearing on said shock absorber, and in this case the vehicle is stopped and gradually oscillates downwards by gravity until its tracks will rest on the stairway, and when the pressure switch and the front sensor or sensors (81-82) detect the effected rest condition the command is automatically given to raise said front feeler (49) completely by means of the respective winch device (145) which by the successive activation of the limit sensor for the raising stroke (164) permits the forward movement of the motor-vehicle if the respective control is still activated.

16. A motor-vehicle according to any one or more of the preceding chaims, wherein the central frame (8) is provided in the intermediate-rear portion thereof with a pair of supporting arms (208) having pivoted transversely thereon (70) the rear portion of the seat of the invalid chair (69) which is connected at a third point (68), e.g. solidary with the back of said chair, to a cylinder-and-piston unit (67) whose body portion is anchored to a support (66) which is secured at the rear of said central frame, said cylinder being connected to actuating solenoid valves which when the motor-vehicle is in the condition for traveling on its tracks (C1-C2), are managed by a so-called inclinometer (71) which is supported either directly or indirectly by said chair (69) and is arranged as near as possible to the fulcrum (70) of said chair to avoid false signals resulting from lateral accelerations; means being provided whereby upon a variation of the inclination of the chair, when the inclinometer changes its orientation and emits a proportional signal to the electronic control circuit, the latter circuit, when a pre-established limit value is overpassed and with a suitable delay, commands the activation of the solenoid valves which control said cylinder (67) to move the chair to its horizontal position.

17. A motor-vehicle according to claim 16, wherein means are provided whereby at least during the descent downstairs or along a strongly inclined plane, the backwards inclination of the chair (69) is suitably advanced, e.g. concurrently with the action of the front feeler (49), for the purpose of preparing the user for the descent travel both from the psycological and safety standpoints, since as a result of this maneuver the user is obliged to remain on the chair and to avoid undesired movements.

18. A motor-vehicle according to claim 17, wherein the inclinometer (71) is mounted on a support (72) which is articulated to the chair on an axis which coincides with the transverse axis of oscillation (70) of said chair and which is urged to a rest position by a spring (73), said support being connected to a flexible sheathed wire (74) carrying at the other end a spring (78) which is tougher than the preceding one and is connected to the front feeler (49), the ends of the sheath for guiding said flexible wire abutting at one end against a support (76) secured to the chair and at the other end against a support (77) secured to the central frame (8), all for the purpose of effecting said condition of advance of the backwards rotation of the chair when the motor-vehicle begins riding downstairs or down a strongly inclined plane.
